# FASCICULE DE BREVET EUROPEEN

(11) **EP 2 223 888 B1**
(45) Date de publication et mention de la délivrance du brevet: **23.11.2016**
(21) Numéro de dépôt: 10290018.0
(22) Date de dépôt: 14.01.2010
(51) Int. Cl.: C01B 3/38, C01B 3/48, C01B 3/52

(54) **Procédé de production d'hydrogène avec captation totale du CO2, et réduction du méthane non converti**
Verfahren zur Herstellung von Wasserstoff mit vollständigen Abtrennen von CO2 und Reduzierung des nicht umgewandelten Methans
Process for the production of hydrogen with total capture of CO2 and reduction of non-converted methane

(30) Priorité: 09.02.2009 FR 0900577
(43) Date de publication de la demande: 01.09.2010
(73) Titulaire: IFP Énergies nouvelles, 92852 Rueil-Malmaison Cedex (FR)
(72) Inventeur: Fischer, Béatrice, 69005 Lyon (FR); Giroudière, Fabrice, 69530 Orlienas (FR); Ambrosino, Jean-Louis, 69360 Ternay (FR)

(56) Documents cités:
- EP-A- 1 935 847
- WO-A-00/03126
- GB-A- 2 160 516
- US-A- 4 479 925
- US-A- 5 935 544
- US-B1- 6 216 464
- "Ullmann's Encyclopedia of Industrial Chemistry, AMMONIA ED - GERHARTZ W; YAMAMOTO Y S" ULLMANN'S ENCYCLOPEDIA OF INDUSTRIAL CHEMISTRY. AMINES, ALIPHATIC TO ANTIBIOTICS; [ULLMANN'S ENCYCLOPEDIA OF INDUSTRIAL CHEMISTRY], WEINHEIM, VCH VERLAG, DE, vol. VOL. A 2, 1 janvier 1985 (1985-01-01) , pages 180-184, XP002253251
- FIASCHI D ET AL: "Exergy analysis of the recuperative auto thermal reforming (R-ATR) and recuperative reforming (R-REF) power cycles with CO2 removal" ENERGY, PERGAMON PRESS, OXFORD, GB, vol. 29, no. 12-15, 1 octobre 2004 (2004-10-01), pages 2003-2024, XP004658229 ISSN: 0360-5442
- FIASCHI D ; LOMBARDI L ; TAPINASSI L: "The Recuperative Auto Thermal Reforming and Recuperative Reforming Gas Turbine Power Cycles With CO2 Removal-Part II: The Recuperative Reforming Cycle" JOURNAL OF ENGINEERING FOR GAS TURBINES AND POWER, vol. 126, no. 2, janvier 2004 (2004-01), pages 62-68, XP009118718

## Description

La présente invention concerne le domaine de la production d'hydrogène, et plus particulièrement un procédé de production d'hydrogène avec captage total du dioxyde de carbone (CO₂) et réduction du méthane non converti.

Le réchauffement climatique de la planète, observé depuis l'ère industrielle selon la communauté scientifique internationale, pourrait modifier dramatiquement les climats et écosystèmes de nombreuses régions du globe. L'émission des gaz à effet de serre, et spécialement le dioxyde de carbone (CO₂) semble être responsable de ce réchauffement.

Les énergies fossiles (gaz naturel, pétrole, charbon) constituent une part importante des énergies facilement disponibles sur la planète. Or ces énergies fossiles, lorsqu'elles sont utilisées, produisent du CO₂ (généralement lors d'une étape de combustion) et participent ainsi au réchauffement climatique.

Une des solutions préconisées pour lutter contre le réchauffement climatique par l'émission de gaz à effet de serre est de capturer le CO₂ produit, puis de le stocker dans le sous-sol. Plusieurs voies sont explorées, dont le captage en précombustion qui consiste à convertir l'énergie fossile en hydrogène avec captage et stockage du CO₂ co-produit. L'hydrogène, vecteur énergétique, peut alors être brûlé librement sans émission de gaz à effet de serre.

Il existe actuellement plusieurs moyens de produire industriellement de l'hydrogène à partir des énergies fossiles. Le moyen le plus répandu est le vaporéformage du gaz naturel réalisé dans un four SMR (Steam Methane Reforming selon la terminologie anglo-saxonne) qui présente l'avantage d'utiliser une charge ayant un ratio hydrogène/carbone élevé compte tenu de la forte teneur en méthane dans sa composition. De façon simplifiée, la réaction catalytique de SMR peut s'écrire de la manière suivantes:

*CH*₄ + *H*₂*O* ↔ *CO* + 3*H*₂

Cette réaction, très endothermique est équilibrée. Elle est favorisée par des températures élevées et est en général mise en oeuvre dans un four chauffé par un combustible tel que le gaz naturel. Classiquement l'unité de SMR est suivie d'une étape de conversion à la vapeur WGS (Water Gas Shift selon la terminologie anglo-saxonne) qui permet de maximiser la production d'hydrogène par la réaction suivante :

*CO* + *H*₂*O* ↔ *CO*₂ + *H*₂

Lorsqu'il faut capter le CO₂ en vue de son stockage, il est possible d'utiliser ensuite une unité de lavage aux amines (methyldiethanolamine, MDEA, activée par exemple) qui va extraire le CO₂ du flux riche en hydrogène, qui sera ensuite envoyé par exemple dans une turbine à gaz en vue de produire de l'électricité, tandis que le CO₂ sera comprimé et réexpédié en sous-sol.

Dans ce type de procédé l'objectif de captage du CO₂ n'est pas du tout atteint, car non seulement il reste encore du CO₂ à la sortie de la turbine du à la présence de méthane, de CO et de CO₂ encore présent dans l'hydrogène, mais il faut davantage de gaz naturel à l'entrée que s'il était envoyé directement dans la turbine. De plus le four dans lequel est réalisé le vaporéformage utilise du gaz naturel et donc émet beaucoup de CO₂. Le taux d'évitement du CO₂ est donc faible.

Une amélioration de cette technique consiste à ajouter une unité d'adsorption sur tamis moléculaire des impuretés modulée en pression (PSA). Deux flux sont ainsi obtenus : un flux d'hydrogène pur à 99.99 % et un flux d'impuretés contenant au moins 20% d'hydrogène. Ce flux à basse pression est envoyé dans des brûleurs du four de vaporeformage, ce qui diminue le gaz naturel nécessaire pour le four, donc la production de CO₂. Cependant le taux d'évitement du CO₂ reste faible, puisque d'une part les impuretés vont sortir sous forme de CO₂ dans les fumées du four, et d'autre part il faut produire davantage d'hydrogène, donc utiliser davantage de gaz naturel pour la charge du vaporeformage.

Un autre procédé de production d'hydrogène permettant de réduire le méthane non converti est le reformage autotherme (ATR pour AutoThermal Reforming selon la terminologie anglo-saxonne). Contrairement au vaporeformage classique, le reformage autotherme nécessite l'apport d'air comprimé pour la réaction. Or la compression d'air est très énergétivore et elle pénalise le rendement global de l'installation. De plus les très gros débits d'azote présents avec l'air augmentent la taille de toutes les installations en aval Dans le cas où de l'oxygène pur est utilisé à la place de l'air pour éviter la présence d'azote, il faut alors prévoir une installation de séparation d'air, ce qui augmente les coûts.

La présente invention a donc pour objet de pallier un ou plusieurs des inconvénients de l'art antérieur en proposant un procédé de production d'hydrogène et d'électricité permettant de capter le CO₂ et de réduire la quantité de méthane non converti, tout en gardant un rendement énergétique global élevé, avec des investissements peu élevés.

Pour cela la présente invention propose un procédé de production d'hydrogène à partir d'une gaz naturel et de vapeur d'eau comprenant :
- une étape dans laquelle une partie du gaz naturel est envoyée vers une unité de réformage à la vapeur, et une autre partie de la gaz naturel est envoyée directement vers un reformeur autotherme, en mélange avec l'effluent issu de l' unité de réformage à la vapeur, avec un ratio vapeur d'eau/carbone dans l'unité de vaporeformage compris entre 2,6 et 2,8 et un ratio vapeur d'eau/carbone dans le réacteur autotherme compris entre 1,7 et 1,9, 15 - une étape de reformage à la vapeur du gaz naturel dans l'unité de vaporéformage,
- une étape de reformage autotherme du flux obtenu à l'étape précédente ainsi que du gaz naturel envoyé directement dans un reformeur autotherme,
- une étape de conversion à la vapeur du gaz de synthèse obtenu à l'étape précédente permettant de convertir le monoxyde de carbone et d'augmenter le flux d'hydrogène,
- une étape de captage du dioxyde de carbone présent dans le flux obtenu à l'étape de conversion à la vapeur permettant de séparer le dioxyde de carbone du flux d'hydrogène.

La proportion de gaz naturel envoyée directement au réacteur autotherme est comprise entre 15 et 50%.

Le réformage à la vapeur s'effectue dans au moins un réacteur-échangeur.

La chaleur du réacteur-échangeur est fournie par les fumées d'une turbine à gaz, réchauffées dans au moins une chambre de combustion disposée avant le réacteur échangeur.

Selon un mode de réalisation de l'invention une partie du flux d'hydrogène est envoyé en mélange avec de la vapeur d'eau vers une turbine à gaz pour produire de l'électricité.

Selon un mode de réalisation de l'invention l'étape de captage du dioxyde de carbone est réalisée dans une unité d'amine utilisant de la méthyldiéthanolamine et au moins une autre amine.

D'autres caractéristiques et avantages de l'invention seront mieux compris et apparaîtront plus clairement à la lecture de la description faite, ci-après, en se référant aux figures annexées et présentant des exemples de réalisation selon l'art antérieur ou l'invention;
- les figures 1 à 4 présentent le schéma d'un mode de réalisation du procédé de production d'hydrogène selon l'art antérieur.
- la figure 5 présente le schéma d'un autre mode de réalisation du procédé selon l'invention.

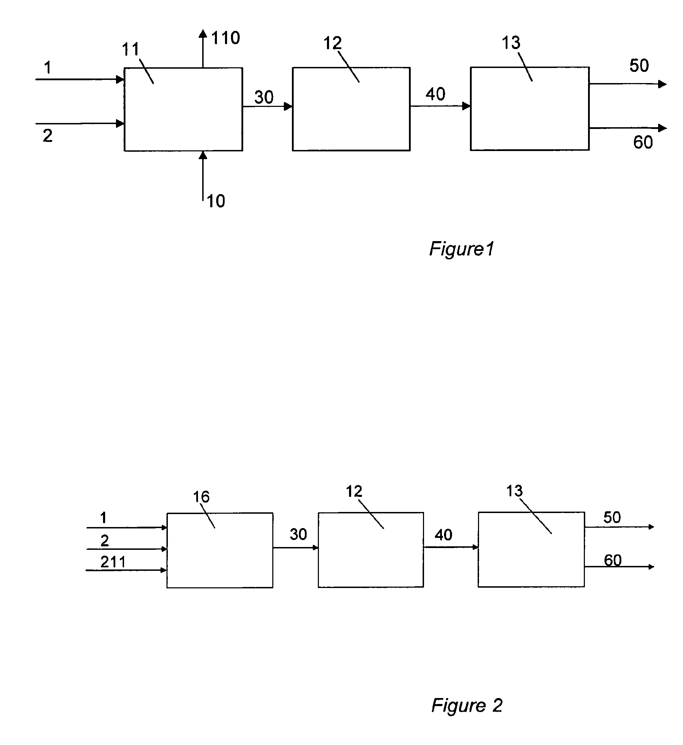

Comme illustré sur les figures 1, 2 et 3, dans le procédé de production d'hydrogène un flux de gaz naturel, et par exemple de gaz naturel, amené par un conduit (1) et un flux de vapeur d'eau circulant dans un conduit (2) sont envoyés comme charge dans une unité de vaporéformage (11). La chaleur nécessaire à la réaction est produite par un flux de combustible, par exemple du gaz naturel, envoyé par un conduit (10) dans le four de vaporéformage. Cette réaction produit en sortie du four (110) un flux de fumées contenant du gaz carbonique. Le flux de gaz de synthèse circulant dans un conduit (30, 24) obtenu par la réaction de vaporéformage contient principalement de l'hydrogène (H₂), du monoxyde de carbone (CO), du dioxyde de carbone (CO₂), ainsi que de la vapeur d'eau (H₂O) et un peu de méthane n'ayant pas réagi (CH₄), car la réaction est équilibrée et même à une température de 900°C, il reste environ 4% de méthane n'ayant pas réagi.

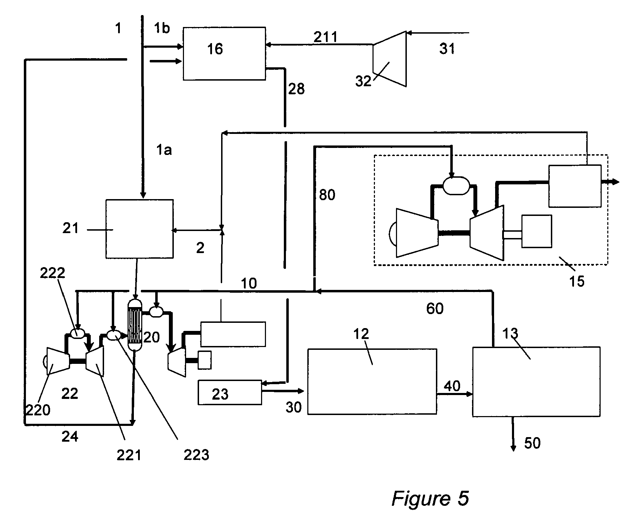

Dans le procédé selon l'invention (illustré sur la figures 5) le flux de gaz de synthèse est amené par le conduit (24) dans un reformeur secondaire autotherme (16). Le reformeur autotherme (16) utilisé dans le procédé selon l'invention peut être tout type de reformeur autotherme classique et bien connu de l'homme du métier. Ce reformeur autotherme (16) est alimenté par le flux provenant de l'unité de vaporéformage et par une partie du flux de gaz naturel circulant dans un conduit (1b). Dans le procédé selon l'invention seulement une partie du flux de gaz naturel circulant dans un conduit (1a) alimente l'unité de vaporéformage (11), l'autre partie du flux de gaz naturel circulant dans le conduit (1b) contourne ou évite (by-pass selon la terminologie anglo-saxonne) l'unité de vaporeformage et alimente directement le reformeur autotherme (16). En général entre 15% et 50%, de préférence entre 25% et 45%, et de manière très préférée entre 30% et 40% de la quantité de gaz naturel contourne l'unité de vaporéformage (11) et passe directement dans le réacteur autotherme (16). De cette manière, la quantité d'air à apporter au reformeur autotherme reste faible comparativement à la solution de l'art antérieur (illustrée sur la figure 2) où le reformeur autotherme (16) remplace l'unité de vaporéformage de la figure 1, ce qui nécessite l'apport de grande quantité d'air comprimé par le conduit (211). Dans le procédé selon l'invention, la quantité d'azote ajoutée n'est ainsi pas pénalisante.

L'utilisation du reformeur autotherme (16), également appelé reformeur secondaire, en plus de l'unité de vaporéformage (11) permet d'obtenir un rendement élevé au niveau de la réaction de vaporéformage, puis de convertir la fraction de méthane non convertie avec le reformeur secondaire autotherme (16).

De plus le contournement de l'unité de vaporeformage par une partie du gaz naturel permet d'ajuster le ratio vapeur d'eau/carbone à une valeur correcte à la fois dans l'unité de vaporeformage (11), c'est-à-dire entre 2,6 et 2,8 et dans le réacteur autotherme (16), c'est-à-dire entre 1,7 et 1,9 et de réduire la taille de la section de vaporeformage et donc de réduire les investissements. En effet, il est nécessaire de mettre davantage de vapeur d'eau que ne l'exigerait la stoechiométrie pour éviter des réactions parasites comme par exemple le craquage thermique qui provoquerait des dépôts de carbone, ce carbone risquant d'empoisonner notamment le catalyseur.

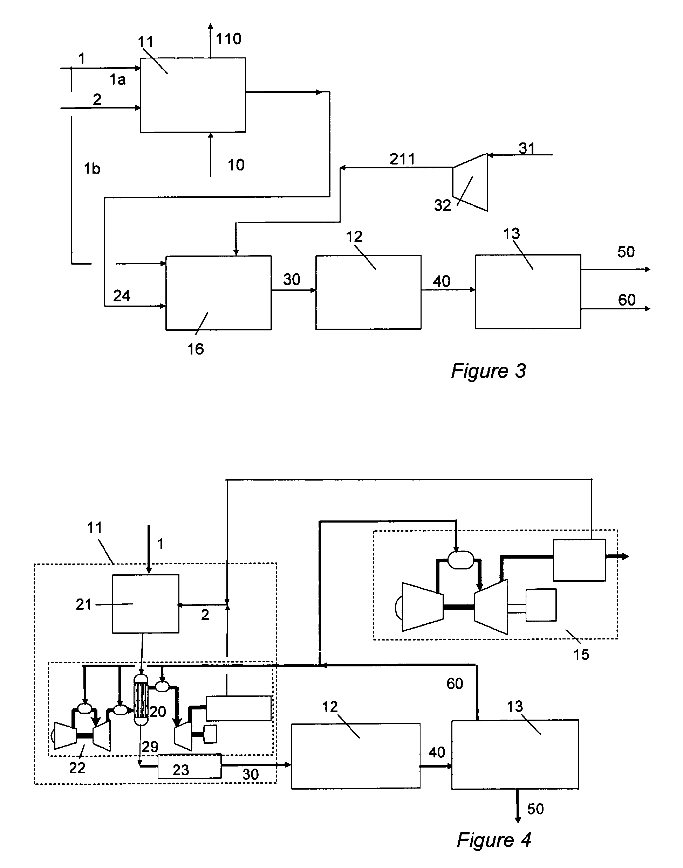

Le procédé de vaporeformage mis en oeuvre dans l'unité de vaporeformage (11) peut de préférence être un procédé de cogénération par turbine à gaz (illustré sur les figures 4 et 5) dans lequel le réformage ne s'effectue pas dans un four, mais dans un réacteur-échangeur et dans lequel la chaleur est fournie par des fumées sous pression provenant d'une partie d'une turbine à gaz, réchauffée dans un brûleur.

La figure 5 représente schématiquement le procédé selon l'invention appliqué à la production d'électricité. Les turbines à gaz comprennent chacune une cellule de détente-compression avec un compresseur d'air (220) lié par un arbre à une turbine de détente (221) et à une chambre de combustion (222). Cette turbine de détente (221) est reliée à une chambre de pré-combustion (223) connecté à un moyen d'échange de type réacteur échangeur (20). Lors du fonctionnement de l'unité les turbines à gaz (22) génèrent un flux de fumées chaudes et sous pression qui est réchauffé dans les chambres de combustion en amont des réacteurs-échangeurs (20). Dans les réacteurs-échangeurs, la chaleur des fumées chaudes est transférée au mélange réactionnel gaz naturel/vapeur d'eau et permet à la réaction très endothermique de réformage à la vapeur de s'effectuer. Le procédé selon la présente invention peut mettre en oeuvre entre 1 et 3 turbines et 1 et 3 réacteurs-échangeurs et de préférence 2 turbines et 2 réacteurs-échangeurs

L'unité comporte des échangeurs de chaleurs (23) pour récupérer la chaleur en sortie du réacteur (16) par le conduit (28) sur la figure 5 et en sortie du réacteur (20) par le conduit (29) sur la figure 3.

L'unité de chauffage (21) permet une préchauffe de la charge et de la vapeur d'eau, Un prétraitement (désulfuration) de la charge, non représenté, peut également être ajouté. Ce procédé de cogénération par turbine à gaz est par exemple décrit de manière plus détaillée dans la demande de brevet WO2004/083729.

L'utilisation couplée d'une unité de vaporeformage et d'un reformeur autotherme dans le procédé selon l'invention permet une meilleure conversion du méthane que l'utilisation d'une unité de vaporeformage seule illustré sur la figure 4. Cette utilisation couplée permet ainsi une meilleure capture du CO₂, tout en minimisant la quantité d'air comprimé par rapport à un reformage autotherme simple, Le procédé selon l'invention permet de plus d'obtenir une meilleure efficacité énergétique, via une minimisation de la perte de puissance pour la compression de l'air. Cette efficacité énergétique se définit comme la puissance fournie par les turbines à gaz et à vapeur diminuée de toutes les consommations électriques du procédé et divisée par le produit du PCI (pouvoir calorifique inférieur) du gaz naturel consommé par le débit de gaz naturel

Ce procédé permet également une réduction des investissements par rapport aux procédés selon l'art antérieur (figure 4).

Le reformeur autotherme est alimenté par le conduit (211) en air comprimé provenant de la compression par un compresseur (32) d'air amené par le conduit (31).

Comme illustré sur la figure 5, le flux de gaz de synthèse obtenu en sortie du reformeur autotherme (16) est envoyé par un conduit (30) à l'unité de conversion à la vapeur (12). Dans cette unité l'essentiel du monoxyde de carbone est converti en dioxyde de carbone à l'aide de la vapeur d'eau, libérant du même coup un peu plus d'hydrogène. Cette réaction aussi est équilibrée, et il reste finalement un peu de monoxyde de carbone (0,5% dans des conditions de conversion poussée). En sortie de l'unité de conversion (12), le flux de conversion obtenu circulant dans un conduit (40) contient essentiellement de l'hydrogène et du dioxyde de carbone, ainsi que l'azote provenant de l'air envoyé au réformeur autotherme. Ce flux de conversion contient également un peu de méthane et de monoxyde de carbone, le reste de vapeur d'eau ayant été condensé après la réaction de conversion à la vapeur.

Le flux de conversion est ensuite envoyé vers une unité de captage de CO₂ (13), qui peut être une unité de captage de CO₂ par des amines, et une unité d'amine utilisant de la méthyldiéthanolamine (MDEA) en combinaison avec au moins une autre amine est particulièrement adaptée. Il est possible d'utiliser d'autres unités de captage de CO₂ bien connues de l'homme du métier.

L'essentiel du CO₂ est séparé et envoyé par un conduit (50) vers une unité de compression et de séchage, pour être ensuite transporté vers un lieu de réinjection tel qu'un gisement épuisé ou une couche géologique adaptée.

Le gaz riche en hydrogène est évacué par un autre conduit (60). Ce gaz comprend de l'azote, un peu de méthane, de monoxyde de carbone et un peu de dioxyde de carbone non capturé (environ 0.5%).

Pour ne pas avoir de CO₂ émis par le four de vaporéformage, une partie de l'hydrogène produit dans l'unité de vaporéformage est utilisée. Une partie de l'hydrogène issu de l'unité de vaporéformage est donc envoyée vers les brûleurs de l'unité de vaporéformage par le conduit (10) de sorte que les fumées sortant par le conduit (110) ne comportent pas de CO₂.

Selon un mode de réalisation de l'invention le reste de l'hydrogène est envoyé, par le conduit (80), à une pression généralement comprise entre 2 MPa et 3 MPa, et par exemple 2,5 MPa et à une température généralement comprise entre 60°C et 130°C vers les chambres de combustion d'une turbine à gaz cycle combiné (15) bien connue de l'homme du métier pour produire de l'électricité. L'hydrogène est ici utilisé en mélange avec de la vapeur d'eau de dilution. Le cycle combiné produit également de la vapeur d'eau qui génère également de l'électricité grâce à des turbines à vapeur. Une partie de la vapeur d'eau est soutirée pour être utilisée par le réformage à la vapeur et le réformage autotherme. Les chambres de combustions des turbines à gaz ne sont actuellement pas capable de brûler de l'hydrogène pur. Il est donc nécessaire de diluer cet hydrogène avec de la vapeur d'eau en provenance des cycles combinés, ce qui diminue légèrement l'efficacité de l'ensemble. Dans le procédé selon l'invention, l'azote provenant de l'air injecté dans le reformeur autotherme se retrouve en mélange avec l'hydrogène envoyé vers les chambres de combustion des turbines à gaz, ce qui permet de diminuer d'autant la vapeur d'eau nécessaire, et donc améliore l'efficacité globale du procédé.

Les exemples suivant illustrent la présente invention.

### Exemple 1 selon l'art antérieur:

On veut réaliser une production électrique de 400 MW mega à l'aide d'un cycle combiné, (turbine à gaz + récupération de chaleur sur la sortie de la turbine avec production de vapeur et turbines à vapeur). Selon les techniques de l'art antérieur deux cas sont possibles.
a - On utilise uniquement un reformeur autotherme à la place de l'unité de vaporeformage on obtient une capture de CO2 supérieure à 90%, mais une efficacité globale voisine de 41%.
b - On utilise uniquement une unité de vaporeformage du type procédé de cogénération par turbine à gaz (11) (illustré sur la figure 4). L'unité de turbines à gaz (22) comprend 3 turbines à gaz en parallèle et l'unité de réacteurs-échangeurs (20) comprend 3 réacteurs-échangeurs permettant de produire suffisamment d'hydrogène pour la turbine principale (15) et les 3 turbines à gaz (22). La simulation donne une efficacité globale de 44.1 %, mais un taux d'évitement de CO₂ de seulement 71%, ce qui n'est pas suffisant.

### Exemple 2 selon l'invention:

On veut réaliser une production électrique de 400 MW à l'aide d'un cycle combiné, (turbine à gaz + récupération de chaleur sur la sortie de la turbine avec production de vapeur et turbines à vapeur).

Le procédé selon l'invention illustré sur la figure 5 est utilisé. Il met en oeuvre seulement 2 turbines en parallèle (22), avec 2 réacteurs échangeurs (20), et la sortie de ces deux réacteurs est envoyée par le conduit (24) vers le réacteur autotherme (16), avec un tiers environ du gaz naturel (1a). Le réacteur autotherme réalise une partie de la réaction, il n'est donc pas nécessaire de disposer de trois réacteurs en parallèle, deux suffisent.

De l'air amené par le conduit (31) est comprimé par un compresseur (32) et envoyé par le conduit (211) vers le réacteur autotherme pour permettre la réaction. Il n'est pas nécessaire d'envoyer de vapeur d'eau car la proportion de vapeur non utilisée dans le réformage à la vapeur représente une quantité suffisante pour l'alimentation du réacteur autotherme, même avec le gaz naturel supplémentaire (1a). En effet, le ratio vapeur/carbone est beaucoup plus faible pour un réacteur autotherme (typiquement entre 1 et 2 sur du gaz naturel) que dans le réformage à la vapeur (typiquement entre 2 et 4). La simulation de ce cas conduit à un taux d'évitement de 91,1% et une efficacité de 42,1%, ce qui est meilleur que le cas autotherme seul.

## Revendications

1. Procédé de production d'hydrogène à partir de gaz naturel et de vapeur d'eau comprenant :
- une étape dans laquelle à une partie (1a) du gaz naturel est envoyée vers une unité de reformage à la vapeur, et une autre partie du gaz naturel (1b) est envoyée directement vers un reformeur autotherme, en mélange avec l'effluent (24) issu de l' unité de reformage à la vapeur, avec un ratio vapeur d'eau/carbone dans l'unité de vaporeformage compris entre 2,6 et 2,8 et un ratio vapeur d'eau/carbone dans le réacteur autotherme compris entre 1,7 et 1,9 ,
- une étape de reformage à la vapeur du gaz naturel dans une unité de vaporéformage, ladite unité de vaporéformage comprenant au moins un réacteur-échangeur (20) dans lequel la chaleur du réacteur-échangeur est fournie par les fumées d'une turbine à gaz, réchauffées dans au moins une chambre de combustion (223) disposée avant ledit au moins un réacteur-échangeur,
- une étape de reformage autotherme du flux obtenu à l'étape précédente ainsi que de la proportion de gaz naturel envoyée directement dans le reformeur autotherme, proportion comprise entre 15% et 50%.
- une étape de conversion à la vapeur (12) du gaz de synthèse obtenu à l'étape précédente permettant de convertir le monoxyde de carbone et d'augmenter le flux d'hydrogène,
- une étape de captage du dioxyde de carbone (13) présent dans le flux obtenu à l'étape de conversion à la vapeur permettant de séparer le dioxyde de carbone du flux d'hydrogène.

2. Procédé de production d'hydrogène selon la revendications 1, dans lequel une partie du flux d'hydrogène est envoyé en mélange avec de la vapeur d'eau vers une turbine à gaz (15) pur produire de l'électricité.

3. Procédé de production d'hydrogène selon une des revendications 1 à 2, dans lequel l'étape de captage du dioxyde de carbone est réalisée dans une unité d'amine utilisant de la méthyldiéthanolamine et au moins une autre amine.

## Patentansprüche

1. Verfahren zur Herstellung von Wasserstoff aus Erdgas und Wasserdampf, umfassend:
- einen Schritt, in dem ein Teil (1a) des Erdgases in eine Dampfreformierungseinheit geschickt wird und ein anderer Teil (1b) des Erdgases direkt in einen autothermen Reformer geschickt wird, in Mischung mit einem Abfluss (24), der aus der Dampfreformierungseinheit stammt, wobei das Verhältnis von Wasserdampf/Kohlenstoff in der Dampfreformierungseinheit zwischen 2,6 und 2,8 liegt und das Verhältnis Wasserdampf/Kohlenstoff in dem autothermen Reaktor zwischen 1,7 und 1,9 liegt,
- einen Dampfreformierungsschritt des Erdgases in der Dampfreformierungseinheit, wobei die Dampfreformierungseinheit mindestens einen Austauscherreaktor (20) umfasst, wobei die Wärme des Austauscherreaktors von dem Dämpfen einer Gasturbine erzeugt wird, die in mindestens einer Verbrennungskammer (223) erhitzt werden, welche vor dem mindestens einen Austauscherreaktor angeordnet ist,
- einen Schritt des autothermen Reformierens des im vorhergehenden Schritt erhaltenen Flusses sowie des Anteils des Erdgases, der direkt in den autothermen Reaktor geschickt wurde, wobei der Anteil zwischen 15 % und 50 % beträgt,
- einen Schritt der Überführung des im vorhergehenden Schritt erhaltenen Synthesegases in Dampf (12), wodurch eine Überführung von Kohlenmonoxid und eine Erhöhung des Wasserstoffflusses ermöglicht werden,
- einen Schritt der Gewinnung von Kohlendioxid (13), das in dem Fluss vorhanden ist, der in dem Schritt der Überführung in Dampf erhalten wurde, wodurch eine Abtrennung des Kohlendioxids von dem Wasserstofffluss ermöglicht wird.

2. Verfahren zur Herstellung von Wasserstoff nach Anspruch 1, wobei ein Teil des Wasserstoffflusses in Mischung mit dem Wasserdampf in eine Gasturbine (15) geschickt wird, um Elektrizität zu erzeugen.

3. Verfahren zur Herstellung von Wasserstoff nach einem der Ansprüche 1 bis 2, wobei der Schritt der Gewinnung von Kohlendioxid in einer Amin-Einheit unter Verwendung von Methyldiethanolamin und mindestens einem weiteren Amin durchgeführt wird.

## Claims

1. Process for the production of hydrogen from natural gas and water vapor comprising :
- A stage in which a portion of the natural gas is sent to a vapor-reforming unit and another portion of the natural gas is sent directly to an autothermal reformer in a mixture with the effluent (24) that is obtained from a vapor-reforming unit, with a water vapor/carbon ratio in the vapor-reforming unit of between 2.6 and 2.8, and a water vapor/carbon ratio in the autothermal reactor of between 1.7 and 1.9,
- A vapor-reforming stage of the natural gas in a vapor-reforming unit, whereby said vapor-reforming unit comprising at least a reactor-exchanger (20) in which the heat of the reactor-exchanger is provided by the flue gases of a gas turbine, heated in at least one combustion chamber (223) that is arranged before said reactor-exchanger,
- A stage for autothermal reforming of the stream that is obtained in the preceding stage as well as the portion of natural gas that is sent directly into an autothermal reformer, portion which is between 15% and 50%,
- A vapor conversion stage (12) of the synthesis gas that is obtained in the preceding stage, making it possible to convert the carbon monoxide and to increase the hydrogen stream,
- A stage for recovering carbon dioxide that is present in the stream that is obtained in the vapor conversion stage, making it possible to separate the carbon dioxide from the hydrogen stream.

2. Process for the production of hydrogen according to claim 1, in which a portion of the hydrogen stream is sent in a mixture with water vapor to a gas turbine (15) for producing electricity.

3. Process for the production of hydrogen according to one of claims 1 to 2, in which the stage for recovering carbon dioxide is implemented in an amine unit that uses methyl diethanolamine and at least one other amine.
